# EUROPÄISCHE PATENTSCHRIFT

(11) **EP 0 548 674 B1**
(45) Veröffentlichungstag und Bekanntmachung des Hinweises auf die Patenterteilung: **22.03.1995**
(21) Anmeldenummer: 92120980.5
(22) Anmeldetag: 09.12.1992
(51) Int. Cl.: B21B 37/16, B21C 51/00, G01B 7/14

(54) **Einrichtung zum Messen des Achsabstandes von Walzen zueinander**
Device for measuring the axial space between the rolls
Dispositif pour mesurer la distance des essieux entre les cylindres

(30) Priorität: 14.12.1991 DE 4141260
(43) Veröffentlichungstag der Anmeldung: 30.06.1993
(73) Patentinhaber: IBN GmbH Dresden, D-01219 Dresden (DE)
(72) Erfinder: Wahl, Günter, O-8021 Dresden (DE)
(74) Vertreter: Simon, Franz

(56) Entgegenhaltungen:
- DE-A- 1 602 033
- DE-B- 1 623 127
- DE-B- 2 224 833

## Beschreibung

Die Erfindung wird in größeren Walzwerken zum Messen des Achsabstandes von Walzen zueinander angewendet und betrifft eine Einrichtung zum Messen des Achsabstandes von Walzen zueinander, bestehend aus Mitteln zum Erzeugen homogener Magnetfelder an den Stirnseiten der Walzen und aus einem mit Magnetfeldsensoren ausgestatteten Meßkopf, der den Stirnseiten der Walzen zugeordnet ist.

In Betrieben, die mit Walzwerken ausgestattet sind, ist es für den reibungslosen technologischen Ablauf oftmals erforderlich, den genauen Achsabstand der Walzen zueinander zu erfassen. Dabei kommen neben mechanischen, optischen, induktiven, kapazitiven und anderen Mitteln auch elektromagnetische Mittel zum Einsatz. Diese haben den Vorteil, daß das durch die entsprechenden Meßwertgeber (zum Beispiel Hall-Generatoren oder andere Magnetfeldsonden) gelieferte Signal relativ einfach ausgewertet werden kann.

Eine Lösung für die Anwendung elektromagnetischer Mittel wird in der DE-B- 16 23 127 gezeigt. Dort ist eine Doppelgabel reibungsarm zwischen den Walzen angeordnet. Die Doppelgabel ist federnd ausgeführt, so daß diese der Lageänderung der Walzen und damit der Änderung des Walzenspaltes folgen kann. Im Quersteg zwischen den beiden Gabelhälften befindet sich ein Sondenträger. Dieser enthält zwei Meßsonden, die symmetrisch zu der durch die Walzenmittelpunkte verlaufende Meßachse angeordnet sind.

Der Sondenträger besteht aus einer magnetisch nicht leitenden Material. Im Bereich der Sonden sind auf dem Sondenträger Polschuhe angebracht, die in Richtung der Durchflutung zeigen. Die elektromagnetische Induktion kann aber auch durch zwei symmetrisch zur Meßachse angeordnete stromdurchflossene Spulen erzeugt werden. Um eine ausreichende Meßgenauigkeit zu erreichen, muß der Luftspalt zwischen Walzenoberfläche und Polschuh bzw. zwischen der Walzenoberfläche und den Polen der stromdurchflossenen Spule so gering wie möglich gehalten werden.

Beim Anlegen einer Wechselspannung entsteht nun eine magnetischer Fluß über Sondenträger bzw. Spule, Luftspalt und Walze. Dieser wird durch die Sensoren aufgenommen. Eine Veränderung der Lage der Walzen bewirkt eine Magnetfeldänderung, die registriert wird und für die elektronische Auswertung zur Verfügung steht.

Der Nachteil ist, daß die Lösung zu aufwendig und technologisch kaum beherrschbar ist.

Der Grund dafür besteht darin, daß eine hohe magnetische Induktion erzeugt werden muß. Das ist deshalb erforderlich, da die Masse der Walzen sehr groß ist und der Werkstoff der Walzen, in der Regel Hartguß, ungünstige magnetische Eigenschaften aufweist. In verschiedenen Teilbereichen, wie zum Beispiel bei der Zerkleinerung körniger Produkte in der Lebensmittelindustrie oder bei der Herstellung von Farbe, ist diese Lösung nicht einsetzbar. Infolge der hohen Induktion besteht dort die Gefahr, daß durch elektrische Entladungen Explosionsgefährdungen entstehen.

Der Erfindung liegt als Aufgabe die Entwicklung einer Einrichtung zugrunde, durch die die Messung des Achsabstandes eines Walzenpaares unter Einsatz von Magnetfeldsensoren erfolgen kann, ohne daß ein hohe magnetische Induktion erforderlich ist.

Die Aufgabe wird erfindungsgemäß dadurch gelöst, daß ausgehend vom Stand der Technik gemäß dem Oberbegriff des Anspruchs 1 die Einrichtung zur Erzeugung eines homogenen Magnetfeldes aus mindestens einem Permanentmagneten besteht, der an der Stirnfläche der Walze derart angeordnet ist, daß die Hauptrichtung des Feldlinienverlaufs des homogenen Magnetfeldes radial zum Mittelpunkt der Stirnfläche der Walze angeordnet ist und der Meßkopf, bestehend aus magnetoresistiven Magnetfeldsensoren, im Gehäuse fest angebracht und dem homogenen Magnetfeld zugeordnet ist.

Der Vorteil der Erfindung besteht darin, daß die magnetische Durchflutung durch Permanentmagnete und nicht durch Elektromagnete erreicht wird. Damit wird der Strombedarf geringer und ein Einsatz in explosionsgeschützten Anlagen wird möglich. Der konstruktive Aufwand ist gering und bestehende Einrichtungen können nachgerüstet werden.

Es erfolgt praktisch eine Messung an 8 Meßpunkten des Walzenpaares, wodurch die genaue Position der Walzen zu diesen Punkten eindeutig erfaßt werden kann. Die Eigenschaften der magnetoresistiven Meßsonden gewährleisten dabei, daß eine Achsrichtung sehr starken Einfluß ( x-Richtung in einem virtuellen Koordinatensystem) aber der Senkrecht dazu verlaufende Abstand zur Walze (y-Richtung) nur geringen Einfluß auf das Meßsignal besitzt.

Das Verfahren soll nun an Hand der nachfolgenden Ausführungsbeispiele näher erläutert werden. Die dazugehörigen Zeichnungen haben folgende Bedeutung:
- Figur 1 :: Schematische Darstellung der Anordnung der Meßköpfe und der Pemanentmagnete
- Figur 2 :: Einzelheit zu Figur 1
- Figur 3 :: Anordnung der Permanentmagnete auf der Stirnfläche der Walze zur Erzeugung eines homogenen Magnetfeldes.
- Figur 4 :: Einzelheit aus Figur 3
- Figur 5 :: Darstellung einer weiteren bevorzugten Variante zur Erzeugung eines homogenen Magnetfeldes
- Figur 6 :: Aufbau des Meßkopfes (in zwei Ansichten)
Wie aus Figur 1 hervorgeht, besteht eine Walzenpaarung aus zwei sich gegenüberliegenden Walzen 1.1 und 1.2. Der geringste Abstand zwischen den Walzenmänteln 2 der Walzen 1.1 und 1.2 bildet den Walzen- oder Arbeitsspalt 3.

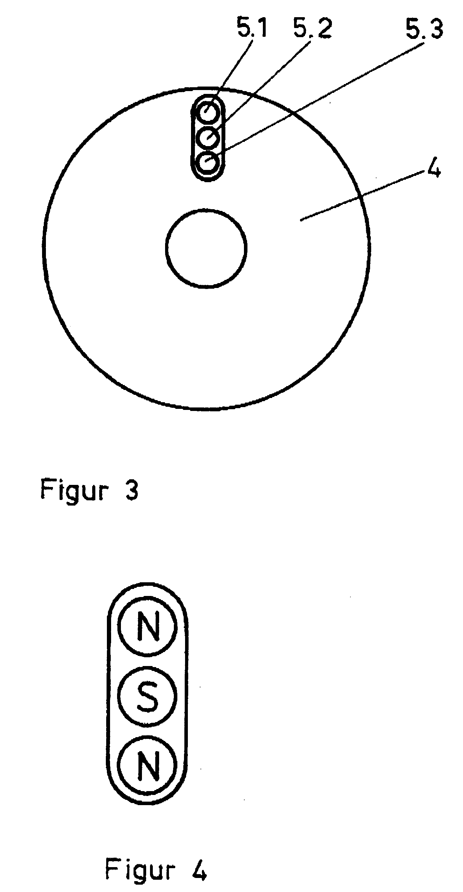

Bei der in Figur 3 gezeigten Ausführungsform der erfinderischen Lösung sind an den Stirnflächen 4 der Walzen 1.1 und 1.2 Permanentmagnete 5.1; 5.2 und 5.3 angeordnet. Pro Stirnfläche 4.1; 4.2 bzw. 4.3; 4.4 werden drei Permanentmagnete 5 benutzt. Die Anordnung erfolgt deshalb im möglichst großen Abstand zu der Rotationsachse der Walzen 1.1 und 1.2., da die Nähe der Achszapfens der Walze 1 die Ausbildung eines homogenen Magnetfeldes beeinträchtigen würde.

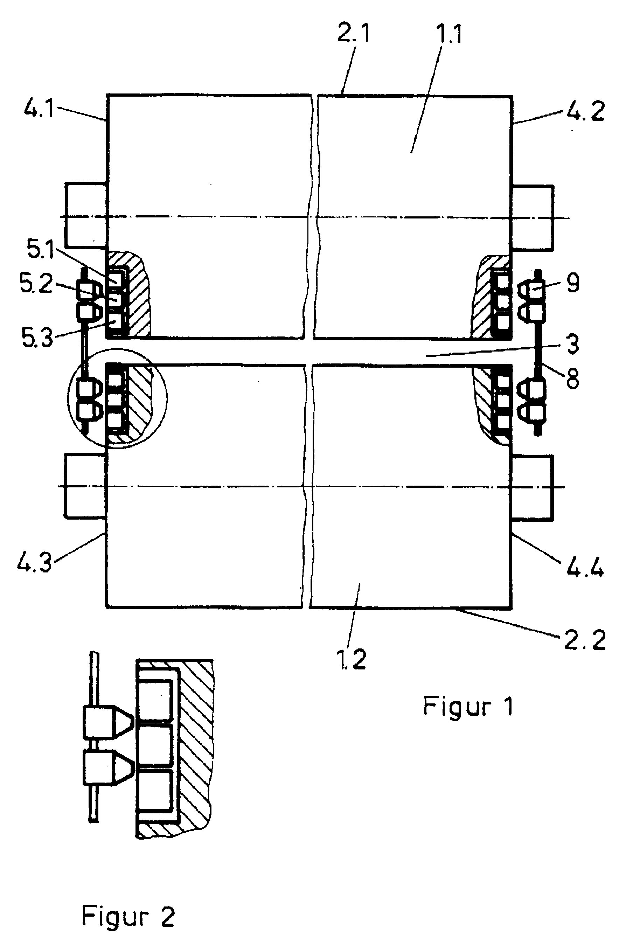

Wie aus Figur 2 ersichtlich, sind die Permanentmagnete 5 in einer Reihe angebracht, die radial zum Mittelpunkt der Stirnfläche 4 der Walze 1.1 bzw. 1.2 angeordnet ist. Der Abstand zwischen den Permanentmagneten wird so gewählt, daß das Auflösungsvermögen optimal wird. Entsprechend Figur 4 sind zwei nebeneinanderliegende Permanentmagnete 5 stets gegenpolig fixiert. Von der Stirnfläche 4 aus betrachtet, liegt somit ein Nordpol neben einem Südpol. Die aus service-technologischen Gründen bevorzugte Reihenfolge ist N-S-N.

Es ist auch möglich, das erforderliche Magnetfeld durch den Einsatz eines Preßlings zu erzeugen, der dann entsprechend magnetisiert ist.

Dabei sind die Permanentmagnete 5 in Bohrungen bündig eingelassen, zentriert und fixiert. Die Bohrung besitzt gegenüber dem Permanentmagneten 5 einen mindestens 1,5 fach größeren Durchmesser. Die Verbindung erfolgt durch kleben oder durch eine andere sichere Verbindung. Für die hier eingesetzten Permanentmagnete 5 werden durchmagnetisierte Werkstoffe verwendet, die aus einer keramischen Preßmasse bestehen. Die Masse der Permanentmagnete 5 ist gegenüber der Masse der Walzen 1.1 und 1.2 sehr gering.

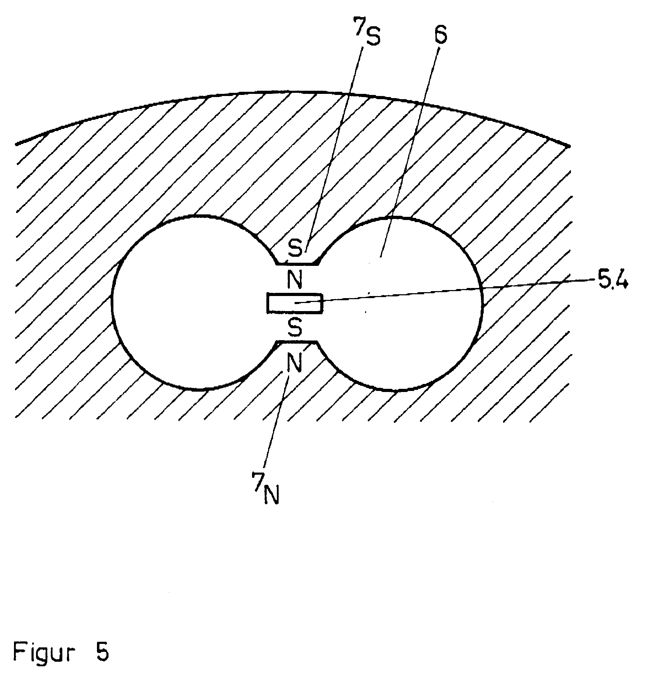

In Figur 5 ist eine weitere bevorzugte Variante der erfinderischen Lösung dargestellt. Diese besteht aus nur einem Permanentmagnet 5.4. Dessen Pole zeigen im Gegensatz zu der oben dargestellten Variante zum Walzenmittelpunkt bzw. vom Walzenmittelpunkt weg. Das heißt, eine gedachte Verbindungslinie zwischen Nord- und Südpol des Permanentmagneten 5.4 führt durch den Mittelpunkt der Stirnfläche 4 der Walze 1. In die Stirnfläche 4 der Walze 1 ist ein Freiraum 6 mit einer dem Feldlinienverlauf angepaßten Kontur angeordnet. Aus der Figur 5 ist ersichtlich, daß der Umriß dieses Freiraumes 6 so gestaltet ist, daß sich aus dem Walzenmaterial Gegenpole 7_{S} und 7_{N} zu den Polen des Permanentmagneten 5.4 bilden.

Den beiden Stirnseiten 4.1 und 4.3 bzw. 4.2 und 4.4 sind je ein Meßkopf 8 mit Magnetfeldsensoren 9 zugeordnet, die alle die gleiche Bauart aufweisen. Die Meßköpfe 8 sind fest im hier nicht dargestellten Gehäuse angeordnet. Die Abstände zwischen den Magnetfeldsensoren 9 korrespondieren mit der Anordnung der Permanentmagnete 5, das heißt, mit den Abständen zwischen den Permanentmagneten 5. Wie aus Figur 1 und insbesondere aus der Figur 2 ersichtlich, sind die Magnetfeldsensoren 9 den Lücken zwischen den benachbarten Permanentmagneten 5 zugeordnet. Das homogen Magnetfeld wirkt auf die Magnetfeldsensoren 9. Bei der Variante nach Figur 5 ist das analog.

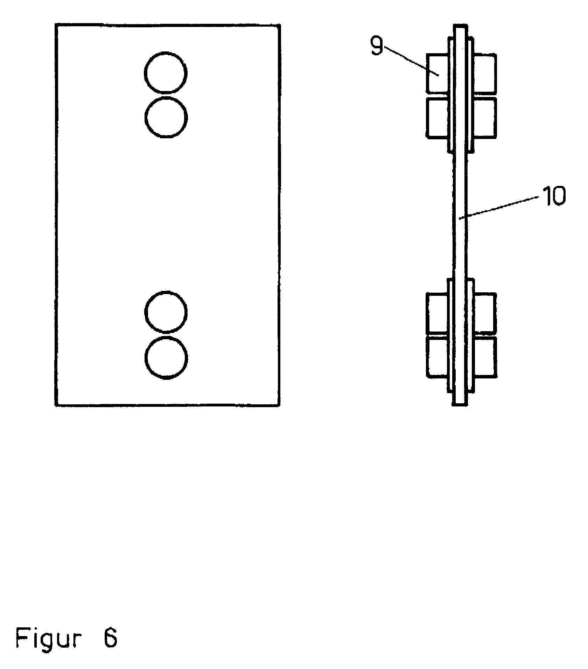

Die Figur 6 zeigt den Aufbau eines derartigen Meßkopfes 8. Dieser besteht aus 4 Magnetfeldsensoren 9, die auf einer Platine 10 senkrecht aufmontiert sind. Als Magnetfeldsensoren 9 finden vorzugsweise magnetoresistive Sensoren Anwendung.

Zur Wirkungsweise der erfindungsgemäßen Einrichtung:
Figur 3 zeigt die Stirnflächen 4 der Walzenpaarung. Aus dieser schematischen Darstellung ist zu erkennen, daß die Permanentmagnete 5 auf einer Kreisbewegung die Rotationsachse umlaufen. Die Drehzahlen der Walzen 1 sind aus technologischen Gründen unterschiedlich, um eine Relativbewegung der Walzenmäntel 2 zu ermöglichen und somit einen Mahl- oder Reibeffekt zu erzielen.

Damit tritt nach jeweils einer Umdrehung, aber zu unterschiedlichen Zeitpunkten eine Anordnung der Permanentmagneten 5 in das Abtastfeld zweier Magnetfeldsensoren 9 ein. Die abgetasteten Signale sind entsprechend des eingestellten Arbeitsspaltes in ihrer Amplitude moduliert (Puls-Amplituden-Modulation). Das durch die an den Sensoren vorbeilaufenden Permanentmagneten 5 erzeugte Impulsmuster ermöglicht über logische Verknüpfung und Verzögerung eine Sampel und Hold Verstärkerstufe so anzusteuern, daß genau das Maximum des höchsten Impulses so abgetastet und als Signalwert im Speicher der Sampel und Hold Stufe für eine Weiterverarbeitung zur Verfügung steht. Mit der zweifachen Abtastanordnung an einer Walze 1 wird die Temperaturkompensation, die Empfindlichkeit des Magnetfeldsensors 9 und die Linearisierung der Kennlinie verbessert. Die Summierung der Signale von Walze 1.1 und Walze 1.2 muß im Operationsbereich der Walzen 1 und bei Arbeitsspalt von 0 immer einen konstanten Wert ergeben. Abweichende Werte sind ein Maß für den eingestellten Arbeitsspalt der Walzen. Dieser Wert wird nach entsprechender Kalibrierung als Walzenabstand in um angezeigt.

## Patentansprüche

1. Einrichtung zum Messen des Achsabstandes von Walzen zueinander, bestehend aus Mitteln zum Erzeugen homogener Magnetfelder an den Stirnseiten (4) der Walzen (1) und einem mit Magnetfeldsensoren (9) ausgestatteten Meßkopf (8), der den Stirnseiten (4) der Walzen (1) zugeordnet ist,
dadurch gekennzeichnet, daß
die Einrichtung zur Erzeugung eines homogenen Magnetfeldes aus mindestens einem Permanentmagneten (5) besteht, der an der Stirnfläche (4) der Walze (1) derart angeordnet ist, daß die Hauptrichtung des Feldlinienverlaufs des homogenen Magnetfeldes radial zum Mittelpunkt der Stirnfläche (4) der Walze (1) angeordnet ist und der Meßkopf (8), bestehend aus magnetoresistiven Magnetfeldsensoren (9), im Gehäuse fest angebracht und dem homogenen Magnetfeld zugeordnet ist.

2. Einrichtung zum Messen des Achsabstandes von Walzen zueinander nach Anspruch 1, dadurch gekennzeichnet, daß der Meßkopf (8) aus 4 Magnetfeldsensoren (9) besteht.

3. Einrichtung zum Messen des Achsabstandes von Walzen zueinander nach Anspruch 1 und 2, dadurch gekennzeichnet, daß die Magnetfeldsensoren (9) auf einer Platine (10) montiert sind

4. Einrichtung zum Messen des Achsabstandes von Walzen zueinander nach Anspruch 1, dadurch gekennzeichnet, daß die Magnetfeldsensoren (9) des Meßkopfes (8) dem homogenen Magnetfeld der Permanentmagneten (5) zugeordnet sind.

5. Einrichtung zum Messen des Achsabstandes von Walzen zueinander nach Anspruch 1, dadurch gekennzeichnet, daß mindestens drei in einer Reihe liegende Permanentmagnete (5) mit wechselnden Polaritäten bezüglich der Stirnfläche (4) der Walzen (1) angeordnet sind.

6. Einrichtung zum Messen des Achsabstandes von Walzen zueinander nach Anspruch 1, dadurch gekennzeichnet, daß ein Permanentmagnet (5.4) so auf der Stirnseite der Walze innerhalb eines entsprechend angepaßten Freiraumes (6) angeordnet ist, daß sich das Magnetfeld zwischen eingearbeiteten Konturen der Walze und den Polen der Permanentmagnete (5) bildet.

7. Einrichtung zum Messen des Achsabstandes von Walzen zueinander nach Anspruch 1, 5 und 6, dadurch gekennzeichnet, daß die Masse der Permanentmagnete (5) zur Masse der Walzen (1) relativ gering ist.

8. Einrichtung zum Messen des Achsabstandes von Walzen zueinander nach den Ansprüchen 1, 5, und 6, dadurch gekennzeichnet, daß die Permanentmagnete (5) in Nuten eingeklebt sind.

## Claims

1. Device for measuring the distance between the centres of rollers relative to one another, characterized by means for generating homogenous magnetic fields on the end faces (4) of the rollers (1) and a measuring head (8) equipped with magnetic field sensors (9) and arranged relative to the end faces (4) of the rollers (1),
characterized by
the device for generating a homogeneous magnetic field comprising at least one permanent magnet (5) arranged on the end faces (4) of the roller (1) in a way that the the field lines of the homogeneous magnetic field are mainly aligned radially with respect to the centre of the end face (4) of the roller (1) and the measuring head (8) consisting of magnetoresistive magnetic field sensors (9) is fixedly installed in the casing and arranged relative to the homogeneous magnetic field.

2. Device for measuring the distance between the centres of rollers relative to one another according to Claim 1, characterized by the measuring head (8) comprising 4 magnetic field sensors (9).

3. Device for measuring the distance between the centres of rollers relative to one another according to Claims 1 and 2, characterized by the magnetic field sensors (9) being mounted on a board (10).

4. Device for measuring the distance between the centres of rollers relative to one another according to Claim 1, characterized by the magnetic field sensors (9) of the measuring head (8) being arranged relative to the homogeneous magnetic field of the permanent magnet (5).

5. Device for measuring the distance between the centres of rollers relative to one another according to Claim 1, characterized by at least three permanent magnets (5) arranged in a line being provided with alternating polarities with respect to the end faces (4) of rollers (1).

6. Device for measuring the distance between the centres of rollers relative to one another according to Claim 1, characterized by a permanent magnet (5.4) being arranged on the end face of the roller in a correspondingly dimensioned open space (6) in a way that the magnetic field develops between machined contours of the roller and the poles of the permanent magnets (5).

7. Device for measuring the distance between the centres of rollers relative to one another according to Claims 1, 5 and 6, characterized by the weight of the permanent magnets (5) being relatively low compared with the weight of the roller (1).

8. Device for measuring the distance between the centres of rollers relative to one another according to Claims 1, 5 and 6, characterized by the permanent magnets (5) being fixed in grooves with adhesive.

## Revendications

1. Dispositif pour mesurer la distance entre axes de cylindres l'un par rapport à l'autre, comportant des moyens pour produire des champs magnétiques homogènes aux côtés frontaux (4) des cylindres (1) et une tête de mesure (8) qui est équipée de capteurs de champ magnétique (9) et affectée aux côtés frontaux (4) des cylindres (1),
caractérisé en ce que
le dispositif pour produire un champ magnétique homogène comporte au moins un aimant permanent (5) qui est disposé sur le côté frontal (4) du cylindre (1) de manière que la direction principale du cours des lignes de force du champ magnétique homogène soit disposée radialement par rapport au centre du côté frontal (4) du cylindre (1), et en ce que la tête de mesure (8), composé de capteurs de champ magnétique magnétorésistifs (9), est fixée solidement dans le carter et affectée au champ magnétique homogène.

2. Dispositif pour mesurer la distance entre axes de cylindres l'un par rapport à l'autre selon la revendication 1, caractérisé en ce que la tête de mesure (8) comporte 4 capteurs de champ magnétique (9).

3. Dispositif pour mesurer la distance entre axes de cylindres l'un par rapport à l'autre selon les revendications 1 et 2, caractérisé en ce que les capteurs de champ magnétique (9) sont montés sur une platine (10).

4. Dispositif pour mesurer la distance entre axes de cylindres l'un par rapport à l'autre selon la revendication 1, caractérisé en ce que les capteurs de champ magnétique (9) de la tête de mesure (8) sont affectées au champ magnétique homogène des aimants permanents (5).

5. Dispositif pour mesurer la distance entre axes de cylindres l'un par rapport à l'autre selon la revendication 1, caractérisé en ce qu'au moins trois aimants permanents (5) disposés sur une ligne ont des polarités alternantes par rapport au côté frontal (4) des cylindres (1).

6. Dispositif pour mesurer la distance entre axes de cylindres l'un par rapport à l'autre selon la revendication 1, caractérisé en ce qu'un aimant permanent (5.4) est disposé sur le côté frontal du cylindre, à l'intérieur d'un espace libre (6) ménagé convenablement, de manière que le champ magnétique se forme entre des contours façonnés du cylindre et les pôles des aimants permanents (5).

7. Dispositif pour mesurer la distance entre axes de cylindres l'un par rapport à l'autre selon les revendications 1, 5 et 6, caractérisé en ce que la masse des aimants permanents (5) est relativement faible par rapport à la masse des cylindres (1).

8. Dispositif pour mesurer la distance entre axes de cylindres l'un par rapport à l'autre selon les revendications 1, 5 et 6, caractérisé en ce que les aimants permanents (5) sont collés dans des rainures.
